# EUROPÄISCHE PATENTSCHRIFT

(11) **EP 0 482 331 B1**
(45) Veröffentlichungstag und Bekanntmachung des Hinweises auf die Patenterteilung: **30.11.1994**
(21) Anmeldenummer: 91115183.5
(22) Anmeldetag: 09.09.1991
(51) Int. Cl.: C08L 79/04, C08L 63/00, C08G 18/00, C08J 5/24

(54) **Reaktivsysteme und ein Verfahren zur Herstellung von modifizierten Duroplasten**
Reactive systems and process for the preparation of modified thermosetting materials
Systèmes réactifs et procédé de préparation de duraplastes modifiés

(30) Priorität: 21.09.1990 DE 4029887
(43) Veröffentlichungstag der Anmeldung: 29.04.1992
(73) Patentinhaber: BAYER AG, 51368 Leverkusen (DE)
(72) Erfinder: Müller, Hanns-Peter, Dr., W-5060 Bergisch Gladbach 2 (DE); Franke, Joachim, Dr., W-5000 Köln 80 (DE); Lindner, Christian, Dr., W-5000 Köln 80 (DE); Gruttmann, Horst, W-5090 Leverkusen 1 (DE); Jacob, Hans-Dieter, W-5090 Leverkusen 3 (DE)

(56) Entgegenhaltungen:
- EP-A- 0 272 563
- EP-A- 0 331 996
- DE-A- 3 644 382
- FR-A- 1 560 641

## Beschreibung

Die vorliegende Erfindung betrifft neue Reaktivsysteme, bestehend aus organischen Polyisocyanaten, organischen Polyepoxiden, Polymermodifikatoren, speziellen Katalysatoren sowie gegebenenfalls weiteren Hilfs- und Zusatzstoffen.

Reaktivsysteme, die auf Basis von Epoxid/Isocyanat (EPIC) Komponenten beruhen, sind beispielsweise in DE 36 44 382 beschrieben.

EPIC-Harze weisen gute Verarbeitungs- und Härtungseigenschaften auf, beim Aushärten ergeben sie Formkörper mit guter mechanischer Festigkeit, Chemikalienbeständigkeit und hohen Glasübergangstemperaturen, jedoch verhältnismäßig großer Sprödigkeit. Ähnliches gilt auch für Epoxidharze und Duroplaste allgemein.

Seit langem besteht der Wunsch der Anwender, duroplastische Kunststoffe zur Verfügung zu haben, die neben der hohen Steifigkeit Chemikalienresistenz und Wärmebeständigkeit, verbesserte Zähigkeit bzw. Duktilität aufweisen.

Der Erfindung lag also die Aufgabe zugrunde, EPIC-Harze zu entwickeln, die beim Aushärten Formkörper mit verbesserter Zähigkeit ergeben, ohne daß aber die Steifigkeit und Wärmebeständigkeit verringert wird.

Es muß als ausgesprochen überraschend bezeichnet werden, daß Polymermodifikatoren vom Typ der Pfropfkautschuke dieses Ziel erreichen. Bekannt ist, daß Modifikatoren als polymere Blendpartner für thermoplastische Kunststoffblends (wie z.B. auf der Basis PVC) verwendet werden. Überraschenderweise lassen sich mit Hilfe solcher Pfropfkautschuke die relevanten mechanischen Eigenschaften gehärterter (also vernetzter) EPIC-Kunststoffe verbessern, ohne daß die thermischen Eigenschaften leiden.

Gegenstand der Erfindung sind demnach:
Reaktivsysteme, bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) Katalysatoren,
d) gegebenenfalls weiteren Hilfs- und Zusatzstoffen, dadurch gekennzeichnet, daß auf 100 g Harz der Komponente a) maximal 100 g Polymermodifikator Komponente b) zum Einsatz gelangen.

Gegenstand der Erfindung sind ebenfalls:
Reaktivsysteme, bestehend aus
a) einer lagerstabilen Mischung aus (i) einer Polyisacyanatkomponente, bestehend aus mindestens einem organischen Polyisocyanat und (ii) einer Epoxidkomponente, bestehend aus mindestens einem organischen Epoxid, das in Gegenwart eines tertiären Amins als Katalysator zu einem Oxazolidinon- und Isocyanuratgruppen aufweisenden, höherviskosen oder bei Raumtempertur festen Zwischenprodukt umgesetzt sind und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) Katalysatoren,
d) gegebenenfalls weiteren Hilfs- und Zusatzstoffen, dadurch gekennzeichnet, daß auf 100 g der Komponente a) maximal 100 g der Komponente b) zum Einsatz gelangen.

Gegenstand der Erfindung sind vorzugsweise Reaktivsysteme, wobei die in der Komponente a) vorliegende Polyisocyanatkomponente (i) ein bei Raumtemperatur flüssiges Polyisocyanat oder Polyisocyanatgemisch der Diphenylmethanreihe oder ein bei Raumtemperatur flüssiges Derivat eines derartigen Polyisocyanats bzw. Polyisocyanatgemischs darstellt.

Die Komponente b) ist ein Pfropfpolymerisat von Vinylmonomeren auf ein teilchenförmiges, wenigstens teilvernetztes Kautschukpolymerisat, worin das Pfropfpolymerisat Kautschukgehalte von 30-80 Gew.-%, bezogen auf 100 Gew.-Teile b) aufweist.

Als Komponente c) werden tert. Amine, Imidazole und/oder latente Katalysatoren vom Typ der tert. oder quart. Ammoniumsalze von alkylierend wirkenden oder sauren Estern von organischen Phosphonsäuren oder der Phosphorsäuren und/oder Additionskomplexe von Bortrihalogeniden mit tert. Aminen verwendet.

Gegenstand der Erfindung ist auch ein:
Verfahren zur Herstellung von (gegebenenfalls geschäumten) Isocyanuratgruppen aufweisenden Kunststoffen, dadurch gekennzeichnet, daß man ein Reaktivsystem bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) Katalysatoren,
d) gegebenenfalls weiteren Hilfs- und Zusatzstoffen, bei geschäumten Formstoffen, Treibmittel durch Abmischen der Einzelkomponenten herstellt und anschließend gegebenenfalls unter Formgebung, durch Wärmezufuhr und/oder Ausnutzung der Reaktionswärme in den endgültigen vernetzten Zustand überführt.

Gegenstand der Erfindung ist auch ein Verfahren zur zweistufigen Herstellung von Isocyanurat- und Oxazolidinongruppen aufweisenden Kunststoffen, dadurch gekennzeichnet, daß man ein Reaktivsystem bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, die in Gegenwart eines tertären Amins als Katalysator zu einem Oxazolidinon- und Isocyanuratgruppen aufweisenden, höherviskosen oder bei Raumtemperatur festen Zwischenprodukt umgesetzt ist und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) latenten Katalysatoren,
   gegebenenfalls nach Auflösen in einem geeigneten Lösemittel,
   gegebenenfalls mit weiteren Hilfs- und Zusatzstoffen d) mischt, gegebenenfalls das Lösemittel abdampft und die Mischung über einen Extruder bei Temperaturen von < 100°C homogenisiert und die erhaltene Polymermischung in einer zweiten Stufe unter Formgebung und weiterer Wärmeeinwirkung in den endgültigen, vernetzten Zustand überführt.

Gegenstand der Erfindung ist schließlich ein Verfahren zur Herstellung von Hochleistungsverbundwerkstoffen, dadurch gekennzeichnet, daß Glas-, Kohlenstoff- oder Aramidfasern in Form von Geweben, Vliesen, Gewirken, Gelegen oder unidirektionalen Fasern unter Bildung von Prepregs mit einer durch latente Katalysatoren voraktivierten Harzmischung gemäß Anspruch 1 und 2, gegebenenfalls nach Auflösen der Harze in einem geeigneten Lösemittel imprägniert, das gegebenenfalls mitverwendete Lösemittel in geeigneten Vorrichtungen abdampft und die erhaltenen Prepregs gegebenenfalls nach Lagerung unter Ausschluß von Feuchtigkeit in einer zweiten Stufe unter Formgebung, weiterer Wärmeeinwirkung und Druck zu den enggültigen Formteilen aushärtet.

In einer bevorzugten Ausführungsform ist die Komponente a) in Gegenwart eines tertiären Amins als Katalysator zu einem Oxazolidinon- und Isocyanuratgruppen aufweisenden, höherviskosen Zwischenprodukt umgesetzt und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters, von Methyljodid oder von Dimethylsulfat abgebrochen. Das so erhaltene, noch flüssige Zwischenprodukt wird dann in Gegenwart der Komponenten b), c) und gegebenenfalls d) zur Reaktion gebracht.

In einer weiteren bevorzugten Ausführungsform wird die Komponente a) in der oben beschriebenen Verfahrensweise bis zu einem bei Raumtemperatur festen Zwischenprodukt umgesetzt und die Reaktion durch Zugabe von Alkylierungsmittel gestoppt. Die Schmelze wird abgekühlt granuliert und das so erhaltene feste Zwischenprodukt mit dem Komponenten b), c) und gegebenenfalls d) in Lösung (z.B. Methylethylketon) gemischt. Es ist aber auch möglich das granulierte Zwischenprodukt a) mit den Komponenten b), c) und gegebenenfalls d) grob vorzumischen und auf einem Extruder bei Temperaturen von vorzugsweise < 100°C zu homogenisieren.

Die dann vorliegenden formulierten Systeme sind lagerstabil und lassen sich in einer zweiten Stufe unter Formgebung und weiterer Wärmeeinwirkung unter Druck gegebenenfalls in Gegenwart von Glas-, Kohlenstoff-, Aramid- oder Metalldraht-, Fasern, Geweben oder Vliesen zu den endgültigen Formteilen aushärten.

Bei der Komponente a) der erfindungsgemäßen Reaktivsysteme handelt es sich um Gemische aus (i) einer Polyisocyanatkomponente und (ii) einer Epoxid-Komponente, wobei letztere durch eine Wärmebehandlung in Gegenwart eines Alkylierungsmittels gemäß der deutschen Patentanmeldungen 38 07 660 und 36 44 282 stabilisiert sind.

Die Polyisocyanatkomponente (i) besteht aus mindestens einem organischen Polyisocyanat der aus der Polyurethanchemie an sich bekannten Art. In Betracht kommen beispielsweise Hexamethylendiisocyanat, Isophorondiisocyanat, trans-trans-Cyclohexyldiisocyanat, die isomeren Xylylendiisocyanate, 4,4'-Diisocyanato-dicyclohexylmethan, 2,4- und/oder 2,6-Diisocyanatotoluol, 4,4'-Diisocyanatodiphenylmethan und gegebenenfalls geringen Mengen 2,2'-Diisocyanatodiphenylmethan und/oder mit seinen höheren Homologen. Derartige Gemische entstehen bekanntlich bei der an sich bekannten Phosgenierung von Anilin-Formaldehyd-Kondensaten. Ferner in Betracht kommen Urethan- und/oder Carbodiimmid- und/oder Uretdion- und/oder Isocyanurat- und/oder Biuret-modifizierte Derivate dieser Polyisocyanate. Vorzugsweise handelt es sich bei der Polyisocyanatkomponente (i) um mindestens ein aromatisches Polyisocyanat. Besonders gut geeignet sind bei Raumtemperatur flüssige Polyisocyanate oder Polyisocyanatgemische der Diphenylmethanreihe oder bei Raumtemperatur flüssige Derivate dieser Polyisocyanate bzw. Polyisocyanatgemische. Die Polyisocyanatkomponente (i) weist im allgemeinen einen NCO-Gehalt von 15 bis 50 Gew.-%, vorzugsweise von 22 bis 34 Gew.-% auf.

Bei der Epoxid-Komponente (ii) handelt es sich um mindestens ein organisches Epoxid, d.h. vorzugsweise um mindestens eine organische Verbindung die pro Molekül 1 bis 4, insbesondere 1 bis 2 Epoxidgruppen bei einem Epoxidäquivalentgewicht von 58 bis 500, vorzugsweise 170 bis 220 aufweist. Geeignet sind Monoepoxide wie beispielsweise Phenoxypropylenoxid, Styroloxid oder Glycidalkohol oder höherfunktionelle Polyepoxide wie beispielsweise Polyglycidylether mehrwertiger Phenole, insbesondere von Bisphenol A; Polyepoxidverbindungen auf der Basis von aromatischen Aminen, insbesondere Bis (N-epoxidpropyl)-anilin, N,N'-Dimethyl-N,N'-diepoxypropyl-4,4'-diaminodiphenylmethan und N-Diepoxypropyl-4-aminophenylglycidylether; Polyglycidylester aus cycloaliphatischen Dicarbonsäuren, insbesondere Hexahydrophthalsäurediglycidylester und Polyepoxide aus dem Umsetzungsprodukt von n-Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexancarboxylat.

Die Epoxide (ii) liegen in den erfindungsgemäßen Komponenten a) in bezüglich ihrer Reaktivität gegenüber Isocyanatgruppen inhibierter, d.h. in stabilisierter Form vor. Diese Stabilisierung der Epoxide erfolgt mittels einer Wärmebehandlung bei 30 bis 150°C, vorzugsweise 80 bis 130°C in Gegenwart eines Alkylierungsmittels, welches im allgemeinen in einer Menge von 0,005 bis 1 Gew.-%, vorzugsweise 0,05 bis 0,25 Gew.-%, bezogen auf das Gewicht des Epoxids, eingesetzt wird. Die Wärmebehandlung erfolgt im allgemeinen während eines Zeitraums von 15 bis 60 Minuten und kann sowohl in Abwesenheit der Polyisocyanatkomponente (i) als auch in Gegenwart zumindest eines Teils dieser Komponente stattfinden. Dies bedeutet, daß die Zugabe des Alkylierungsmittels und auch die anschließende Wärmebehandlung sowohl vor der Vereinigung des Epoxids mit dem Polyisocyanat als auch nach erfolgter Abmischung des Epoxids mit zumindest einem Teil des Polyisocyanats stattfinden können

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkylester wie n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -n-butylester, 1-Naphthalinsulfonsäuremethylester, 3-Nitrobenzolsulfonsäure-methylester oder 2-Naphthalinsulfonsäureethylester. Die beispielhaft genannten aromatischen Sulfonsäureester sind bevorzugt. Besonders bevorzugt wird p-Toluolsulfonsäuremethylester verwendet.

Im übrigen liegen in der Komponente a) die Epoxide (ii) in einer solchen Menge vor, daß auf 100 g der Komponente a) 0,005 bis 0,4, vorzugsweise 0,01 bis 0,15 Mol Epoxidgruppen entfallen.

Bei der Komponente b) der erfindungsgemäßen Systeme handelt es sich um bekannte Pfropfkautschuke, die aus einem Kautschukpolymerisat und Erweichungstemperaturen unter 0°C und auf den Kautschuk wenigstens partiell aufgepfropftem Polymerisat aus wenigstens einem Vinylmonomerpolymerisat bestehen. Als Kautschuke fungieren Dienmonomerkautschuke auf der Basis von Butadien, Isopren, Chloropren, gegebenenfalls in Mischung mit bis zu 35 Gew.-% anderer Monomerer wie Styrol, Acrylnitril oder Alkyl(meth)acrylat, Olefinkautschuke auf der Basis von Ethylen, Propylen, Isobutylen, Vinylacetat, Kohlenmonoxid, Alkylacrylat und geringen Mengen Dienmonomer oder Alkylacrylatkautschuke auf der Basis von Alkylacrylatmonomeren (insbesondere C₁-C₇-Alkylacrylat) gegebenenfalls in Mischung mit bis 10 Gew.-% anderer Vinyl- oder Alkylmonomeren. Besonders bevorzugte Pfropfkautschuke b) mit wenigstens partiell vernetzte Systeme und werden durch radikalische Pfropfung von Vinylmonomeren auf ein Kautschukpolymerisat, das wenigstens teilweise vernetzt vorliegt, erzeugt.

Besonders bevorzugte Pfropfkautschuke besitzen weiterhin eine teilchenförmige Struktur mit mittleren Teilchendurchmesser (d₅₀-Wert) von 0,1 - 0,8 µm.

Vorzugsweise werden solche Komponenten b) über bekannte radikalische Emulsionspfropfpolymerisation erzeugt.

Zur Herstellung der erfindungsgemäßen Systeme sind besonders Pfropfkautschuke b) bevorzugt, die einen Kautschukgehalt von 40 - 80 Gew.-% aufweisen (bezogen auf 100 Gew.-Teilen b)).

Als bevorzugte aufgepfropfte Vinylmonomere fungieren wenigstens ein Monomer aus der Reihe Styrol, p-Methylstyrol, α-Methylstyrol, Acrylnitril, Methacrylnitril, (1-6-Alkyl(meth))-acrylat, Vinylacetat, Vinylether, Maleinsäureanhydrid, Maleinsäureimide oder (Meth)Acrylamide; besonders geeignet sind Styrol-Acrylnitril-Kombinationen oder Methylmethacrylat-haltige Kombinationen als Pfropfmonomere. Besonders bevorzugte Pfropfpolymerisate stellen die dem Fachmann als ABS, ASA, EPAS oder MFS bekannte Polymerisate dar.

Bei der Katalysatorkomponente c) handelt es sich um beliebige mono- oder polyfunktionelle organische Amine mit tert.-Aminogruppen. Geeignete Amine der genannten Art weisen im allgemeinen ein Molekulargewicht von bis zu 353, vorzugsweise 101 bis 185 auf. Bevorzugt sind tert.-Amine wie z.B. Triethylamin, Tributylamin, N,N,N',N'-Tetramethylethylendiamin, N,N-Dimethyl-benzylamin, N,N-Dibenzyl-methylamin, Triethylendiamin oder Dimethyloctylamin, N-Methylmorpholin und Bis-(N,N-dimethyl-aminoethyl)-ether.

Die Katalysatoren c) werden in einer Menge von 0,01 bis 3, vorzugsweise 0,01 bis 1 Gew.-% bezogen auf das Gesamtgewicht der Komponenten a) und b), eingesetzt.

Im übrigen ist die Verfahrensweise in Zweistufenverfahren in der deutschen Patentanmeldung 3 644 382 ausführlich beschrieben und gilt auch sinngemäß für die vorliegende Erfindung.

Werden als Katalysatoren Imidazole eingesetzt, so werden folgende Verbindungen bevorzugt: N-Methylimidazol, Cyanethyl-phenyl-imidazol und Ethylmethylimidazol.

Als latente Katalysatoren c) werden vorzugsweise solche verwendet wie sie in DE 36 44 382 auf S. 13, Zeile 7 bis S. 16, Zeile 21 ausführlich beschrieben und offengelegt sind. Gegebenenfalls mitzuverwendende Hilfs- und Zusatzmittel d) sind ebenfalls in DE 36 44 382, S. 17, Zeile 9 bis S. 19, Zeile 33 ausführlich beschrieben und offengelegt. Gleiches gilt für die Anwendung dieser Hilfs- und Zusatzmittel S. 19, Zeile 35 bis S. 21, Zeile 15.

Unter Hilfs- und Zusatzstoffen sollen auch Treibmittel verstanden werden, wie z.B. (halogenierte) Kohlenwasserstoffe, Wasser oder spezielle Katalysatoren, die unter Carbodimidbildung CO₂ abspalten.

Die Aushärtung der erfindungsgemäßen Reaktivsysteme erfolgt in der Regel durch Erhitzen der Gemische auf Temperaturenvon mindestens 60°C, vorzugsweise 60 bis 150°C, wobei es zwecks Erreichens optimaler Eigenschaften oftmals angezeigt ist, die resultierenden Kunststoffe bei Temperaturen zwischen 150 und 250°C, vorzugsweise zwischen 200 und 230°C, nachzuhärten.

Im Falle der Anwendung des Zweistufenverfahrens ist es möglich, die Harze kurzfristig durch Aufschmelzen auf einen Extruder bei Temperaturen < 100°C mit den latenten Katalysatoren und den erfindungsgemäßen polymeren Modifikatoren b) und gegebenenfalls weiteren Hilfs- und Zusatzstoffen der beschriebenen Art zu homogenisieren und - gegebenenfalls nach Zwischenlagerung - unter Zufuhr weiterer Wärme zu den endgültigen vernetzten Kunststoffen umzusetzen.

Das erfindungsgemäße Verfahren dient zur Herstellung von schlagzähmodifizierten duroplastischen Kunststoffen mit hoher Wärmebeständigkeit. Es kann daher herangezogen werden zur Herstellung von Formteilen und Konstruktionswerkstoffen für Autoteile, Flugzeuge, elektr. betriebene Geräte und vielen anderen Werkstoffen bei denen die Kombination von hoher Chemikalienresistenz, Wärmebeständigkeit, Zähigkeit und Steifigkeit der Kunstsstoffe gewünscht sind.

Das erfindungsgemäße Verfahren kann auch zur Herstellung von Tränk- und Imprägnierungsmassen für Elektroisolierungen oder für glasfaserverstärkte Laminate herangezogen werden. Das erfindungsgemäße Verfahren eignet sich zur Herstellung von elektrischen Bauteilen nach dem Gießverfahren. Hierzu gehören beispielsweise gedruckte Schaltungen, elektronische Uhren, Taschenrechner, elektronische Kameras, Computer, Mikrocomputer und digital arbeitende Datenspeicher. Die Herstellung derartiger Formkörper erfolgt stets unter entsprechender formgebender Verarbeitung, wobei die Formgebung vor oder während der Wärmebehandlung stattfinden kann. Die Harze können auch als Pressmassen für die Elektronikindustrie verwendet werden.

Die Wärmebeständigkeit der erfindungsgemäßen Verfahrensprodukte, die niedrigen dielektrischen Verluste, die Feuchtebeständigkeit und die Abriebfestigkeit sowie die Verarbeitbarkeit in Formen sind hervorragend. Außerdem eignet sich das erfindungsgemäße Verfahren zur Herstellung von Isolierstoffen der Isolierstoffklassen H und C in elektrischen Motoren und Generatoren, zur Herstellung von Konstruktionswerkstoffen für Flugzeuge, Raketen oder anderen hoch beanspruchten Geräten. Die Harze können, falls es sich um Festkörper handelt, als Pulverlackbindemittel oder als Klebstoff, insbesondere für Thermoplaste, eingesetzt werden. Auch die Herstellung von Isolatoren, Transformatoren, Kondensatoren, Schichtpreßstoffen zur Herstellung von Rohren, Behältern oder Sportgeräten unter entsprechend vorgegebener Verarbeitung der Harze ist möglich.

Der Gegenstand der Erfindung soll anhand der folgenden Beispiele näher erläutert werden.

Als Polymermodifikator (Komponente b) wurde nachfolgend ein ABS-Pfropfpolymerisat eingesetzt. Das als grobes Pulver vorliegende Polymerisat besteht aus 55 Gew.-% Butadien mit einem Gelgehalt von 88 Gew.-% und 45 Gew.-% Styrol- Acrylnitril-Copolymeriat (mit einem Acylnitrilgehalt von 28 Gew.-%). Das Polymerisat besitzt eine mittlere Teilchengröße von 0,4 µm (d₅₀-Wert).

### Beispiel 1

64 Gew.-Teile eines Gemischs aus 60 % 2,4-Diisocyanatodiphenylmethan und 40 % 4,4-Diisocyanatodiphenylmethan (NCO-Gehalt = 33,6 %) werden mit 16 Gew.-Teilen des Diglycidethers von Bisphenol A (Epoxidzahl = 0,5), 0,08 Gew.-Teilen p-Toluolsulfosäuremethylester und 20 Gew.-Teilen Polymermodifikator (wie oben beschrieben unter Rühren und Stickstoff 30 min auf 120°C erhitzt. Nach Abkühlen erhält man ein lagerstabiles, weißes, disperses Harz mit folgenden Kenndaten:
NCO-Gehalt = 20,2 %
Viskosität bei 25°C = 11890 mPas.

Zur Herstellung eines Duroplasten werden zu 100 g des obigen Harzes 1 g Dimethylbenzylammonium-dibutylphosphat gemischt, unter Rühren im Vakuum entgast und in eine Form gegossen. Die Form wird in einem Ofen 4 Std. auf 80°C, 16 Std. auf 120°C, 4 Std. auf 180°C und 4 Std. auf 200°C erhitzt.

Mechanische Eigenschaften der Probeplatte: siehe Tabelle 1.

### Beispiel 2 (Vergleichsbeispiel):

64 Gew.-Teile der Isocyanatmischung aus Beispiel 1 und 16 Gew.-Teile des Epoxidharzes aus Beispiel 1 werden mit 0,08 Gew.-Teilen p-Toluolsulfonsäuremethylester unter Rühren und Stickstoff 30 min auf 120°C erhitzt. Das lagerstabile Harz hat einen NCO-Gehalt von 26,2 % und eine Viskosität von 30 mPas bei 25°C.

Zur Herstellung eines Duroplasten werden 100 g dieses Harzes mit 1 g Dimethylbenzylammonium-dibutylphosphat gemischt, unter Rühren im Vakuum entgast und in eine Form gegossen. Die Form wird in einem Ofen 4 Std. auf 80°C, 16 Std. auf 120°C, 4 Std. auf 180°C und 4 Std. auf 200°C erhitzt.

Mechanische Eigenschaften der Probeplatte: siehe Tabelle 1.

### Beispiel 3

70 Gew.-Teile der Isocyanatmischung aus Beispiel 1 und 10 Gew.-Teile des Epoxidharzes aus Beispiel 1 werden mit 0,8 Gew.-Teilen p-Toluolsulfonsäuremethylester und 20 Gew.-Teilen des Polymer-Modifikators aus Beispiel 1 unter Rühren und Stickstoff 30 min auf 90°C erhitzt. Nach Abkühlen erhält man ein lagerstabiles, disperses Harz mit folgenden Kenndaten:
NCO-Gehalt: 23,1 %
Viskosität: 6000 mPas_{25°C}
100 Gew.-Teile dieses Harzes werden mit 1 Gew.-Teil Dimethylbenzylammonium-dibutylphosphat versetzt, im Vakuum unter Rühren entgast und in eine Form gegossen. Die Form wird in einem Ofen 2 Std. auf 100°C, 2 Std. auf 120°C, 4 Std. auf 160°C und 16 Std. auf 200°C erhitzt.

Mechanische Eigenschaften der Probeplatten: siehe Tabelle 1.

### Beispiel 4

160 Gew.-Teile der Isocyanatmischung aus Beispiel 1 und 400 Gew.-Teile des Epoxidharzes aus Beispiel 1 werden unter Rühren und Stickstoff mit 0,3 Gew.-Teile Dimethylbenzylamin gemischt und auf 130°C erhitzt. Innerhalb von 7 Std. fällt der NCO-Gehalt auf 13,8 %. Die Reaktion wird durch Zugabe von 1 Gew.-Teil p-Toluolsulfonsäuremethylester und 30 min Nachrühren bei 130°C gestoppt. Die viskose Schmelze wird ausgegossen und erstarrt bei Raumtemperatur zu einem klebfreiem Harz (B-Zustand). Der NCO-Gehalt beträgt nun 13,2 %.

900 Gew.-Teile dieses Harzes im B-Zustand werden mit 100 Gew.-Teilen Polymer-Modifikator aus Beispiel 1 und 10 Gew.-Teilen Dimethyloctylamin ^{·} BCl₃-Komplex mit einer Verweilzeit von 2 min auf einem Extruder bei 80°C gemischt. Der NCO-Gehalt des bei Raumtemperatur klebfreiem Produktes beträgt 10,3 %. 14 Tage nach Lagerung bei Raumtemperatur beträgt der NCO-Gehalt 10,2 %. Eine Probe schmilzt und verläuft bei 160°C gut und vernetzt nach 3 min.

**Tabelle 1**

| Mechanische Eigenschaften der modifizierten Duroplasten (aus Beispiel 1 und 3) im Vergleich zu Beispiel 2 | | | | |
|---|---|---|---|---|
| | Duroplast aus Beispiel | | | |
| | Meßmethode DIN | 1 | 2 (Vgl.) | 3 |
| Zugfestigkeit [MPas] | 53455 | 53,98 | 49,46 | 62,36 |
| Reißdehnung [%] | 53455 | 2,8 | 1,45 | 3,54 |
| E-Modul aus Zugverversuch [MPas] | 53457 | 3267 | 3641 | 2303 |
| Biegefestigkeit [MPas] | 53452 | 107,1 | 100,8 | 122,9 |
| Randfaserdehnung [%] | 53452 | 5,21 | 4,05 | 7,41 |
| Martensgrad [°C] | 53458 | 197 | 192 | 202 |

## Patentansprüche

1. Reaktivsysteme, bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke, wobei auf 100 g Harz der Komponente a) maximal 100 g Polymermodifikator Komponente b) zum Einsatz gelangen,
c) Katalysatoren,
d) gegebenenfalls weiteren Hilfs- und Zusatzstoffen.

2. Reaktivsysteme, bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, das in Gegenwart eines tertiären Amins als Katalysator zu einem Oxazolidinon- und Isocyanuratgruppen aufweisenden, höherviskosen oder bei Raumtempertur festen Zwischenprodukt umgesetzt sind und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke, wobei auf 100 g der Komponente a) maximal 100 g der Komponente b) zum Einsatz gelangen,
c) Katalysatoren,
d) gegebenenfalls weiteren Hilfs- und Zusatzstoffen.

3. Reaktivsysteme gemäß einen der Ansprüche 1 oder 2, dadurch gekennzeichnet, daß die in der Komponente a) vorliegende Polyisocyanatkomponente (i) ein bei Raumtemperatur flüssiges Polyisocyanat oder Polyisocyanatgemisch der Diphenylmethanreihe oder ein bei Raumtemperatur flüssiges Derivat eines derartigen Polyisocyanats bzw. Polyisocyanatgemischs darstellt.

4. Reaktivsysteme gemäß einem der Ansprüche 1 bis 3, dadurch gekennzeichnet, daß die Komponente b) ein Pfropfpolymerisat von Vinylmonomeren auf ein teilchenförmiges, wenigstens teilvernetztes Kautschukpolymerisat darstellt, worin das Pfropfpolymerisat Kautschukgehalte von 30-80 Gew.-%, bezogen auf 100 Gew.-Teile b) aufweist.

5. Reaktivsysteme gemäß einem der Ansprüche 1 bis 4, dadurch gekennzeichnet, daß als Komponente c) tert. Amine, Imidazole und/oder latente Katalysatoren vom Typ der tert. oder quart. Ammoniumsalze von alkylierend wirkenden oder sauren Estern von organischen Phosphonsäuren oder der Phosphorsäuren und/oder Additionskomplexe von Bortrihalogeniden mit tert. Aminen vorliegen.

6. Verfahren zur Herstellung von (gegebenenfalls geschäumten) Isocyanuratgruppen aufweisenden Kunststoffen, dadurch gekennzeichnet, daß man ein Reaktivsystem bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Allkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) Katalysatoren,
d) gegebenenfalls weiteren Hilfs- und Zusatzstoffen, bei geschäumten Formstoffen, Treibmittel, durch Abmischen der Einzelkomponenten hergestellt und anschließend gegebenenfalls unter Formgebung, durch Wärmezufuhr und/oder Ausnutzung der Reaktionswärme in den endgültigen vernetzten Zustand überführt.

7. Verfahren zur zweistufigen Herstellung von Isocyanurat- und Oxazolidinongruppen aufweisenden Kunststoffen, dadurch gekennzeichnet, daß man ein Reaktivsystem bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, die in Gegenwart eines tertiären Amins als Katalysator zu einem Oxazolidinon- und Isocyanuratgruppen aufweisenden, höherviskosen oder bei Raumtemperatur festen Zwischenprodukt umgesetzt sind und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) Polymermodifikatoren aus der Reihe der Pfropfkautschuke,
c) latenten Katalyatoren, gegebenenfalls nach Auflösen in einem geeigneten Lösemittel gegebenenfalls mit weiteren Hilfs- und Zusatzstoffen d) mischt, gegebenenfalls das Lösemittel abdampft und die Mischung über einen Extruder bei Temperaturen von < 100°C homogenisiert und die erhaltene Polymermischung in einer zweiten Stufe unter Formgebung und weiterer Wärmeeinwirkung in den endgültigen, vernetzten Zustand überführt.

8. Verfahren zur Herstellung von Hochleistungsverbundwerkstoffen, dadurch gekennzeichnet, daß Glas-, Kohlenstoff- oder Aramidfasern in Form von Geweben, Vließen, Gewirken, Gelegen oder unidirektionalen Fasern unter Bildung von Prepregs mit einer durch latente Katalysatoren voraktivierten Harzmischung gemäß Anspruch 1 und 2, gegebenenfalls nach Auflösen der Harze in einem geeigneten Lösemittel imprägniert, das gegebenenfalls mitverwendete Lösemittel in geeigneten Vorrichtungen abdampft und die erhaltenen Prepregs gegebenenfalls nach Lagerung unter Ausschluß von Feuchtigkeit in einer zweiten Stufe und Formgebung und weiterer Wärmeeinwirkung unter Druck zu den endgültigen Formteilen aushärtet.

## Claims

1. Reactive systems consisting of
a) a storage-stable mixture of (i) a polyisocyanate component consisting of at least one organic polyisocyanate and (ii) an epoxide component consisting of at least one organic epoxide, wherein storage stability has been ensured by heat treatment of the epoxide component (ii) in the presence of an alkylating agent, which heat treatment is optionally performed in the presence of at least part of the polyisocyanate component (i), and wherein the quantity ratios of components (i) and (ii) are selected such that 0.005 to 0.4 mol of epoxide groups are present in 100 g of component a),
b) polymer modifiers from the series of graft rubbers, wherein at most 100 g of the component b) polymer modifier may be used for 100 g of the component a) resin,
c) catalysts,
d) optionally further auxiliary substances and additives.

2. Reactive systems consisting of
a) a storage-stable mixture of (i) a polyisocyanate component consisting of at least one organic polyisocyanate and (ii) an epoxide component consisting of at least one organic epoxide, which are reacted in the presence of a tertiary amine as catalyst to yield an intermediate product which has a relatively high viscosity or is solid at room temperature and contains oxazolidinone and isocyanurate groups, and the reaction is terminated at a conversion of at most 65% of the isocyanate groups present in the starting mixture by the addition of a quantity of alkylating sulphonic acid alkyl ester at least equivalent to the quantity of amine and wherein the quantity ratios of components (i) and (ii) are selected such that 0.005 to 0.4 mol of epoxide groups are present in 100 g of component a),
b) polymer modifiers from the series of graft rubbers, wherein at most 100 g of the component b) polymer modifier may be used for 100 g of the component a) resin,
c) catalysts,
d) optionally further auxiliary substances and additives.

3. Reactive systems according to one of claims 1 or 2, characterised in that the polyisocyanate component (i) present in component a) is a polyisocyanate or polyisocyanate mixture of the diphenylmethane series which is liquid at room temperature or a derivative, also liquid at room temperature, of such a polyisocyanate or polyisocyanate mixture.

4. Reactive systems according to one of claims 1 to 3, characterised in that component b) constitutes a graft polymer of vinyl monomers onto a particulate, at least partially crosslinked rubber polymer, in which the graft polymer has a rubber content of 30-80 wt.% related to 100 parts by weight of b).

5. Reactive systems according to one of claims 1 to 4, characterised in that the compounds present as component c) are tertiary amines, imidazoles and/or latent catalysts of the type of tertiary or quaternary ammonium salts of alkylating or acid esters of organic phosphonic acids or phosphoric acids and/or addition complexes of boron trihalides with tertiary amines.

6. Process for the production of (optionally foamed) plastics containing isocyanurate groups, characterised in that a reactive system consisting of
a) a storage-stable mixture of (i) a polyisocyanate component consisting of at least one organic polyisocyanate and (ii) an epoxide component consisting of at least one organic epoxide, wherein storage stability has been ensured by heat treatment of the epoxide component (ii) in the presence of an alkylating agent, which heat treatment is optionally performed in the presence of at least part of the polyisocyanate component (i), and wherein the quantity ratios of components (i) and (ii) are selected such that 0.005 to 0.4 mol of epoxide groups are present in 100 g of component a),
b) polymer modifiers from the series of graft rubbers,
c) catalysts,
d) optionally further auxiliary substances and additives, blowing agents in the case of foamed moulded materials, is produced by blending the individual components and then converted into the final crosslinked state by supplying heat and/or exploiting the heat of reaction, optionally accompanied by a shaping process.

7. Process for the two-stage production of plastics containing isocyanurate and oxazolidinone groups, characterised in that a reactive system consisting of
a) a storage-stable mixture of (i) a polyisocyanate component consisting of at least one organic polyisocyanate and (ii) an epoxide component consisting of at least one organic epoxide, which are reacted in the presence of a tertiary amine as catalyst to yield an intermediate product which has a relatively high viscosity or is solid at room temperature and contains oxazolidinone and isocyanurate groups, and the reaction is terminated at a conversion of at most 65% of the isocyanate groups present in the starting mixture by the addition of a quantity of alkylating sulphonic acid alkyl ester at least equivalent to the quantity of amine and wherein the quantity ratios of components (i) and (ii) are selected such that 0.005 to 0.4 mol of epoxide groups are present in 100 g of component a),
b) polymer modifiers from the series of graft rubbers,
c) latent catalysts, optionally after being dissolved in a suitable solvent, is optionally mixed with further auxiliary substances and additives d), the solvent optionally evaporated off and the mixture homogenised in an extruder at temperatures of < 100°C and the polymer mixture obtained is converted into the final crosslinked state in a second stage comprising a shaping process and further action of heat.

8. Process for the production of high performance composite materials, characterised in that fibres of glass, carbon or aramid in the form of woven, non-woven, knitted, laid fabrics or unidirectional fibres are impregnated with a resin mixture according to claims 1 and 2 which has been preactivated with latent catalysts to form prepregs, optionally after dissolving the resins in a solvent, the optionally used solvent is evaporated off in suitable equipment and the prepregs obtained are cured to form the final moulded articles in a second stage comprising shaping and further action of heat under pressure, optionally after storage with exclusion of moisture.

## Revendications

1. Systèmes réactifs, consistant en :
a) un mélange stable au magasinage (i) d'un constituant polyisocyanate consistant en au moins un polyisocyanate organique, et (ii) d'un constituant époxyde, consistant en au moins un époxyde organique, la stabilité au magasinage ayant été assurée par un traitement thermique du constituant (ii), réalisé éventuellement en présence d'au moins une partie du constituant polyisocyanate (i) en présence d'un agent d'alkylation, et le rapport entre les quantités des constituants (i) et (ii) étant choisi de façon que, dans 100 g du constituant (a), il y ait 0,005 à 0,4 mol de groupes époxydes;
b) des modificateurs polymère choisis dans la série des caoutchoucs greffés, avec utilisation, pour 100 g de la résine du constituant (a), de 100 g au maximum du constituant (b) comme modificateur polymère,
c) des catalyseurs,
d) éventuellement d'autres adjuvants et additifs.

2. Systèmes réactifs, consistant en
a) un mélange, stable au magasinage, de (i) un constituant polyisocyanate, consistant en au moins un polyisocyanate organique et (ii) un constituant époxyde, consistant en au moins un époxyde organique que l'on a fait réagir en présence d'une amine tertiaire comme catalyseur pour obtenir un produit intermédiaire à viscosité élevée ou solide à la température ambiante, présentant des groupes oxazolidinones et isocyanurates, la réaction ayant été interrompue à un taux de transformation de 65 % au maximum des groupes isocyanates présents dans le mélange de départ, par addition d'une quantité d'un ester alkylique d'acide sulfonique à action d'alkylation équivalant au moins à la quantité de l'amine, et le rapport entre les quantités des constituants (i) et (ii) étant choisies de façon que, dans 100 g du constituant a) il y ait présence 0,05 à 0,4 mol de groupes époxydes,
b) des modificateurs polymère choisis parmi des caoutchoucs ,greffés, avec utilisation, pour 100g du constituant (a) de 100g au maximum du constituant (b);
c) des catalyseurs,
d) éventuellement d'autres adjuvants et additifs.

3. Systèmes réactifs selon l'une des revendications 1 ou 2, caractérisés en ce que le composant polyisocyanate (i), présent dans le constituant (a) est un polyisocyanate ou mélange de polyisocyanates liquides à la température ambiante de la série du diphénylméthane ou un dérivé, liquide à la température ambiante, d'un tel polyisocyanate ou d'un tel mélange de polyisocyanates.

4. Systèmes réactifs selon l'une des revendications 1 à 3, caractérisé en ce que le constituant (b)est un polymère de greffage de monomères vinyliques sur un caoutchouc polymère au moins partiellement réticulé, en forme de particules, le polymère greffé présentant des teneurs en caoutchouc de 30 à 80 % en poids, pour 100 parties en poids de (b).

5. Systèmes réactifs selon l'une des revendications 1 à 4, caractérisé en ce qu'ils comportent comme constituant (c) des amines tertiaires, des imidazoles et/ou des catalyseurs latents du type de sels d'ammoniums tertiaires ou quaternaires d'esters à action d'alkylation ou d'ester acide dérivant d'acides phosphoniques organiques ou d'acides du phosphore et/ou de complexes d'addition de trihalogénures du bore avec des amines tertiaires.

6. Procédé de préparation de matières synthétiques ou plastiques (éventuellement alvéolaires ou mises en forme de mousse), présentant des groupes isocyanurates, procédé caractérisé en ce qu'on produit, par mélangeage des constituants individuels, un système réactif consistant en
a) un mélange, stable au magasinage, de (i) un constituant polyisocyanate, consistant en au moins un polyisocyanate organique et (ii) un constituant époxyde, consistant en au moins un époxyde organique, la stabilité au magasinage ayant été garantie par un traitement de chauffage du constituant époxyde (ii), effectué en présence d'un agent d'alkylation et éventuellement effectué en présence d'au moins une partie du constituant polyisocyanate (i), les rapports entre les quantités des constituants (i) et (ii) étant choisis de façon que, dans 100 g du constituant a), il y ait présence 0,05 à 0,4 mol de groupes époxydes,
b) des modificateurs polymère choisis parmi des caoutchoucs greffés,
c) des catalyseurs,
d) éventuellement d'autres adjuvants et additifs et, dans le cas d'objets moulés alvéolaires, un agent de gonflement ou porogène, et l'on transforme ensuite le système, éventuellement avec formage, par apport de chaleur et/ou utilisation de la chaleur de réaction, pour faire passer ce système à l'état réticulé final.

7. Procédé de préparation en deux étapes de matières synthétiques ou plastiques présentant des groupes isocyanurates et des groupes oxazilidonnes, procédé caractérisé en ce que l'on mélange un système réactif consistant en
a) un mélange, stable au magasinage, de (i) un constituant polyisocyanate, consistant en au moins un polyisocyanate organique et (ii) un constituant époxyde, consistant en au moins un époxyde organique que l'on a fait réagir en présence d'une amine tertiaire comme catalyseur pour obtenir un produit intermédiaire présentant des groupes oxazolidinones et isocyanurates, à viscosité élevée ou solide à la température ambiante, la réaction ayant été interrompue, à un taux de transformation de 65 % au maximum des groupes isocyanates présents dans le mélange de départ, par addition d'une quantité, correspondant au moins à la quantité d'amine, d'un ester alkylique d'acide sulfonique à rôle d'alkylation, et les rapports entre les quantités des constituants (i) et (ii) étant choisis de façon que, dans 100 g du constituant a) il y ait présence de 0,05 à 0,4 mol de groupes époxydes,
b) des modificateurs polymère choisis dans la série des caoutchoucs greffés,
c) des catalyseurs latents, éventuellement après dissolution dans un solvant convenable, éventuellement avec d'autres adjuvants et additifs, d); on chasse éventuellement le solvant par évaporation et l'on homogénéise le mélange dans une extrudeuse à des températures inférieures à 100°C, et, dans une seconde étape on transforme le mélange polymère ainsi obtenu, après formage et sous l'action supplémentaire d'un apport de chaleur, pour le faire passer à l'état réticulé final.

8. Procédé de production de matériaux composites à grande capacité de charge mécanique, procédé caractérisé en ce qu'on imprègne des fibres de verte, des fibres de carbone et des fibres d'aramide sous forme de tissus, de nappe de carde, de tricots, de voiles ou de fibres unidirectionnelles, avec formation d'un produit de pré-imprégnation, à l'aide d'un mélange de résines pré-activé par des catalyseurs latents, selon la revendication 1 ou 2, éventuellement après dissolution des résines dans un solvant convenable, on chasse par évaporation dans des appareils convenables le solvant éventuellement co-utilisé, éventuellement après magasinage à l'abri de l'humidité, on soumet, dans une seconde étape et avec formage et sous l'effet d'un apport supplémentaire de chaleur sous pression, les produits de pré-imprégnation obtenus à une transformation avec durcissement complet donnant les pièces moulées ou conformées finales.
